# EUROPÄISCHE PATENTSCHRIFT

(11) **EP 3 012 603 B1**
(45) Veröffentlichungstag und Bekanntmachung des Hinweises auf die Patenterteilung: **11.07.2018**
(21) Anmeldenummer: 15169276.1
(22) Anmeldetag: 26.05.2015
(51) Int. Cl.: G01G 13/00, G05B 19/418

(54) **VERFAHREN UND COMPUTERPROGRAMM ZUR ERFASSUNG UND QUANTIFIZIERUNG VON KENNGRÖSSEN IN EINEM PRODUKTIONSPROZESS**
METHOD AND COMPUTER PROGRAM FOR REGISTERING AND QUANTIFICATION OF CHARACTERISTICS OF A PRODUCTION PROCESS
PROCEDE ET PROGRAMME INFORMATIQUE DESTINES A LA DETECTION ET LA QUANTIFICATION DE GRANDEURS DANS UN PROCESSUS DE PRODUCTION

(30) Priorität: 21.10.2014 DE 102014115338
(43) Veröffentlichungstag der Anmeldung: 27.04.2016
(73) Patentinhaber: Qube Ing UG, 12621 Berlin (DE)
(72) Erfinder: MÜNCH, Martin, 12623 Berlin (DE); RAESCHLER, Boris, 10243 Berlin (DE)
(74) Vertreter: Schulz Junghans Patentanwälte PartGmbB

(56) Entgegenhaltungen:
- WO-A1-2008/113584
- WO-A1-2010/063799
- WO-A2-03/007256

## Beschreibung

Die Erfindung betrifft ein Verfahren gemäß Anspruch 1 und ein Computerprogramm gemäß Anspruch 9. In der verarbeitenden Industrie ist eine computergesteuerte Erfassung und Auswertung von Daten einzelner Prozessschritte immer wichtiger geworden. Diese oftmals mit der Bezeichnung Industrie 4.0 bezeichnete Erfassung und Optimierung von Prozessschritten, umfasst im Wesentlichen die Eigenschaften, dass die verschiedenen Fertigungseinheiten miteinander kommunizieren können und so die einzelnen Prozessschritte besser aufeinander abgestimmt bzw. existierende Verluste in Form nicht genutzter Ressourcen sichtbar gemacht werden (Material, Mitarbeiter, Fehler, Fläche). Zukünftig wird der optimale Einsatz der bestehenden Ressourcen einen wesentlichen, ökonomischen Wettbewerbsvorteil darstellen. Dafür ist die Erfassung von sogenannten Prozessleistungsindikatoren, wie beispielsweise der Ressourcenverluste und die verständliche Visualisierung dieser essentiell notwendig. Ein Risiko im Rahmen dieser Datenerfassung ist im Rahmen von "big data" der geringe Nutzwert dieser Daten. Das Steuern und Auswerten der Daten im für den Anwender sinnvollen Rahmen wird ein wesentlicher Wettbewerbsvorteil unter den Softwareherstellern sein.

Ein weiterer Aspekt, der in Zukunft immer wichtiger werden wird, ist die Materialeffizienz bei Produktionsprozessen. Die Deutsche Materialeffizienzagentur (DEMEA) hat in einer Studie festgestellt, dass allein in Deutschland jedes Jahr 100 Mrd. Euro aufgrund von Materialineffizienz verloren gehen. Trotz dieser Verluste, wird dieses Thema weitestgehend nicht richtig bewertet und erkannt. Dies kann damit zusammenhängen, dass für die Steigerung der Materialeffizienz keine oder nur wenige geeignete Lösungen am Markt verfügbar sind.

In der verarbeitenden Industrie ist daher abzusehen, dass die Materialeffizienz eines Prozesses ein immer wichtiger werdender Aspekt werden wird.

Eine Möglichkeit, Materialverluste zu erfassen, ist das Auswiegen von Produkten. In der Patentschrift WO 2008/113584 A1 ist ein Verfahren zum Parametrieren von Waagen beschrieben, welche in einem Förderprozess befindliche Produkte auf einem Wägeband wiegen. Hierbei finden nach der Eingabe produktspezifischer Daten ein Teach-Vorgang und anschließend ein Verifizierungsvorgang statt. Weiterhin ist ein Verfahren zum Betrieb einer derart parametrierten Waage beschrieben.

Um Fertigungsprozesse möglichst genau erfassen zu können, sind Markierungen von Produkten vorteilhaft. Die Patentschrift WO 2010/063799 A1 richtet sich auf eine Vorrichtung zum Identifizieren und Markieren von Objekten mittels RFID mit einer Lese- oder Schreib-/Leseeinheit.

Ein Überwachungssystem mit einem Wiegesensor und einem Barcode-Scanner ist in der Patentschrift WO 03/007256 A2 beschrieben.

In herkömmlichen Industrieanlagen werden häufig schon kommunizierende computergesteuerte Maschinen eingesetzt, jedoch ist es bisher mit einem großen Aufwand verbunden, die Materialeffizienz eines Prozesses zu messen und zu verbessern. Dies liegt daran, dass insbesondere zur Erhöhung der Materialeffizienz zunächst festgestellt werden muss, wo Verluste oder Engpässe entstehen, um diese dann zu beheben.

Diese Probleme werden durch ein Verfahren mit den Merkmalen des Anspruchs 1 und durch ein Computerprogramm mit den Merkmalen des Anspruchs 9 gelöst.

Vorteilhafte Ausführungsformen der Erfindung sind in den Unteransprüchen aufgeführt und werden nachfolgend näher erläutert.

Dabei weist nach Anspruch das erfindungsgemäße Verfahren zum Erfassen und Quantifizieren von Kenngrößen eines Prozesses, umfassend einen Prozesshauptstrom aus Werkstücken, der bevorzugt in Prozessschritten abgearbeitet wird, die folgende Schritte auf:
- Unterteilen des Prozesshauptstroms in zu untersuchende Prozessnebenströme aus Werkstücken,
- Definieren von Messpunkten für den Prozess, wobei jedem Messpunkt ein zu untersuchender Prozessnebenstrom zugeordnet wird,
- Erfassen von Daten für jeden Messpunkt für den ihm zugeordneten zu untersuchenden Prozessnebenstrom mit zumindest einem Messsystem, wobei die Daten zumindest eine gemessene Kenngröße des jeweiligen zu untersuchenden Prozessnebenstroms enthalten,
- Auswerten der erfassten Daten für zumindest einen Messpunkt oder insbesondere selektierte Messpunkte
- wobei an zumindest einem Messpunkt ausgewählte Werkstücke des jeweils zu untersuchenden Prozessnebenstroms erfasst und/oder ein-, um- oder aussortiert werden,
   dadurch gekennzeichnet, dass
- die ausgewählten Werkstücke des jeweils zu untersuchenden Prozessnebenstroms an dem jeweiligen Messpunkt in einem dem jeweiligen Messpunkt zugeordneten Sammelbehälter gesammelt werden,
- wobei mit dem mindestens einen Messsystem für die Messpunkte jeweils ein gemessenes Gewicht der in dem Sammelbehälter gesammelten Werkstücke als Kenngrößen gemessen wird, wobei die erfassten Daten diese mindestens eine Kenngröße enthalten,
- wobei die Sammelbehälter mit einer Markierung markiert werden, so dass die am Messsystem erfassten Daten durch die Markierung dem jeweiligen Messpunkt zuordenbar sind,
- wobei die Daten oder aus den Daten erzeugte Größen für den mindestens einen Messpunkt angezeigt werden.

Als Prozess wird hier beispielsweise eine Produktionslinie bezeichnet, entlang derer Werkstücke verarbeitet werden. Dabei werden die Werkstücke entlang eines Prozesshauptstroms bewegt, der sich insbesondere in Prozessnebenströme unterteilen lässt. Entlang des Prozesshauptstroms und/oder der Prozessnebenströme werden die Werkstücke insbesondere durch Prozessschritte modifiziert oder in sonstiger Weise bearbeitet. Als Werkstück wird in diesem Zusammenhang auch Rohmaterial bezeichnet.

Ein Prozesshauptstrom sowie ein Prozessnebenstrom können grundsätzlich Stoffströme oder Produktströme sein, und weisen insbesondere eine Vielzahl von Werkstoffen auf, die entlang einer Produktionslinie (z.B. Fertigungsstraße) transportiert werden (und beispielsweise am Ende des Prozesshauptstroms zu einem Produkt zusammengefügt werden).

Als Werkstück kommen insbesondere Komponenten, Teile von Komponenten oder andere Prozessgüter in Betracht. Als Werkstück wird in diesem Zusammenhang auch ein Teil, ein Produktionsausschuss, wie Abfall und/oder ein Verschnitt bezeichnet. So können Komponenten oder Teilbereiche eines Werksstücks in diesem Zusammenhang ebenso als Werkstück aufgefasst werden.

Das Unterteilen des Prozesshauptstroms in zu untersuchenden Prozessnebenströme umfasst insbesondere auch das Definieren und/oder Markieren von Prozessnebenströmen. Dies kann insbesondere durch ein entsprechendes Computerprogramm geschehen.

Ein Prozessnebenstrom wird insbesondere aus dem Prozesshauptstrom abgezweigt (z.B. Ausschuss, Verschnitt etc.). Weiterhin kann ein Prozessnebenstrom dem Prozesshauptstrom oder einem anderen Prozessnebenstrom wieder zugeführt werden. Auch ein Abschnitt des Prozesshauptstroms kann als ein Prozessnebenstrom definierst sein.

Eine Kenngröße kann beispielsweise das Gewicht eines oder mehrerer Werkstücke eines zu untersuchenden Prozessnebenstroms sein, wobei insbesondere das Gewicht eines aussortierten Werkstücks oder mehrerer Werkstücke von Interesse sein kann. Eine Kenngröße weist beispielsweise ein Werkstück bzw. einen zu untersuchenden den Prozessnebenstrom als aussortiert bzw. als auszusortieren aus.

Weiterhin kann durch eine Kenngröße auch die Verarbeitungsgeschwindigkeit insbesondere an einem Arbeitsplatz entlang des zu untersuchenden Prozessnebenstroms einer oder mehrerer Werkstücke, insbesondere zwischen zwei Prozessschritten erfasst werden.

Ein Messpunkt kann insbesondere eine Abzweigung für insbesondere einige Werkstücke des zu untersuchenden Prozessnebenstroms, eine Sortierungsstation für die Werkstücke des zu untersuchenden Prozessnebenstroms und/oder der Standort einer Zählvorrichtung für den Prozess sein, wobei jedem Messpunkt ein zu untersuchender Prozessnebenstrom zugeordnet.

Das Messsystem kann sich insbesondere an einem anderen Standort als der Messpunkt befinden. Ebenso kann ein Messsystem vorgesehen sein, dass die Daten mehrerer Messpunkte erfasst. Das Messsystem kann weiterhin beispielsweise mit einem Computer verbunden sein, so dass eine Kommunikation mit dem Computer ermöglicht ist, und insbesondere Daten an ein Computerprogramm auf dem Computer übertragen werden können.

Durch das Auswerten der erfassten Daten für den zumindest einen Messpunkt oder die selektierten Messpunkte kann der Prozess charakterisiert und optimiert werden. Eine Auswertung der Daten erfolgt beispielsweise durch Zusammenfassen von Wartezeiten an einem bestimmten Messpunkt, durch Vergleich oder Darstellung von entstehenden Abfallmengen an ausgewählten Messpunkten. Ebenso kann eine Auswertung der Daten einen Vorschlag bezüglich einer Ablaufänderungen entlang der Prozessnebenströme enthalten. Darüber hinaus wird insbesondere der Ist-Zustand mit dem Soll-Zustand verglichen, woraus sich die Effizienz des jeweiligen Prozesses ableiten lässt.

Ein Prozesshauptstrom oder ein Prozessnebenstrom kann insbesondere auch ein Informationsstrom sein, dessen Komponenten Informationen sind, die zu einer weiteren Information verarbeitet werden.

Als Sammelbehälter kommen insbesondere Vorrichtungen in Betracht, die dazu geeignet sind, die ausgewählten Werkstücke zu sammeln. Dazu müssen solche Sammelbehälter insbesondere keine Wandung oder einen Boden aufweisen, sondern müssen bezüglich ihrer Ausformung nur dazu geeignet sein, die Werkstücke zu sammeln. Dies kann auch virtueller Natur sein. Typischerweise ist ein Sammelbehälter ein Container, der dazu ausgebildet ist, regelmäßig zwischen dem Messpunkt und einer Messvorrichtung bewegt zu werden. Insbesondere ist der Sammelbehälter fahrbar.

Es sei hier nochmals erwähnt, dass mit Werkstücken auch Ausschussstücke, Teile von Werkstücken, Fertigungsstücke oder Komponenten für Werkstücke fallen. Insbesondere sind diese Sammelbehälter also auch für den Ausschuss eines zu untersuchenden Prozessnebenstroms vorgesehen.

Das Markieren der Sammelbehälter ist insbesondere vorteilhaft, weil hierdurch eine Nach- bzw. Rückverfolgung der Werkstücke bzw. der Sammelbehälter erfolgen kann, mittels derer der Prozess bzw. Prozessstrukturen optimiert werden können. Bei einer "anonymen" Erfassung von Daten, also ohne Markierung, gemäß dem Stand der Technik ist eine Prozessoptimierung wesentlich aufwendiger wenn nicht unmöglich. Durch die Markierungen können Prozesse weiter optimiert werden. Eine Markierung muss nicht zwingend physikalisch erfolgen, sondern kann auch mittels eines virtuellen Markers erfolgen der ausgewählten. Sammelbehältern zugeordnet wird.

In einer bevorzugten Ausführungsform der Erfindung werden die Sammelbehälter mit einer maschinenlesbaren Markierung, insbesondere mit einem ein- oder zweidimensionalen Barcode (auch Matrixbarcode genannt), bevorzugt mit einem Strichcode und/oder einem sogenannten Quick Response Code (oder kurz QR-Codes) und/oder einem radio-frequency identification Chip (kurz RFID Chip) markiert.

Diese Art der Markierung ist vorteilhaft, da sie robust und zuverlässig durch entsprechende Scan-Systeme ausgelesen werden kann.

Die Markierung des Sammelbehälters kann beispielsweise durch auf dem jeweiligen Sammelbehälter angebrachte Aufkleber, die einen solchen ein und/oder zweidimensionalen Barcode und/oder einen RFID Chip aufweisen, erfolgen.

Die Zahl von gesammelten Werkstücken, lässt sich insbesondere über das GesamtGewicht aller Werkstücke ermitteln, wenn alle Werkstücke gleichartig sind.

Ein Pick-to-Light-System zeigt üblicherweise einer Person an, aus welchem Fach eines Regals oder aus welcher Charge von Gegenständen/ Werkstücken die Person einen Gegenstand entnehmen soll. Die Anzeige erfolgt beispielsweise durch eine über dem jeweiligen Fach angeordnete Leuchtvorrichtung, die aufleuchtet, um anzuzeigen, dass aus diesem Fach der Gegenstand entnommen werden soll. Ein solches Pick-to-Light System weist insbesondere einen Sensor auf, der erkennen kann, ob die Person den Gegenstand aus dem angezeigten Fach entnommen hat. Durch diese Sensoren kann insbesondere festgestellt werden, ob ein Fehlgriff - also der Gegenstand beispielsweise aus dem falschen Fach entnommen wurde - erfolgt ist oder nicht. Im Gegensatz zu einem Pick-to-Light System ist ein Put-to-Light System analog zu einem Pick-to-Light System ausgestaltet, mit dem Unterschied, dass die Person die Gegenstände/Werkstücke nicht den Fächern entnimmt sondern in die Fächer einsortiert.

Die Erfassung eines Zeitintervalls erfolgt insbesondere durch verschiedene Start-Stop-Zeitmessungen.

Vorteilhaft an dieser Ausführungsform ist, dass insbesondere diese Kenngrößen geeignet sind, Daten über einen zu untersuchenden /optimierenden Prozess zu erheben, die so verarbeitet werden können, dass Empfehlungen zur Optimierung des Prozesses generiert werden können.

In einer Ausführungsform der Erfindung ist vorgesehen, dass die Erfassung der Daten für den jeweiligen Messpunkt mit dem Messsystem auf zumindest eine der folgenden Arten erfolgt:
- durch ein Wiegeverfahren, insbesondere verbunden mit einer Markierungserfassung (beispielsweise durch eine Scan-Vorrichtung),
- durch eine Objekt-Erkennung für die Werkstücke des Prozessnebenstroms mit einer Bilderfassungseinrichtung,
- durch ein optisches Verfahren, insbesondere aufweisend eine Lichtschranke,
- durch ein Transmitter-Verfahren, aufweisend zumindest einen Näherungssensor, insbesondere in Form eines RFID-Chip-Transmitter-Systems,
- durch ein Pick-to-Light Verfahren oder ein Put-to-Light Verfahren,
- durch Benutzereingabe,
- durch Messung von Prozessschrittdauern.

Ein RFID-Chip-Transmitter-Verfahren bezeichnet eine Technologie für Sender-Empfänger-Systeme zum automatischen und insbesondere berührungslosen Identifizieren und Lokalisieren von Objekten (Produkte - Lebewesen) mit Radiowellen.

Objekterkennung erfolgt üblicherweise anhand durch Bilderfassungseinrichtungen, wie beispielsweise einer Kamera, gekoppelt mit einem Verfahren bzw. einem Computerprogramm, das bzw. die dazu ausgebildet ist, bestimmte Objekte zu erkennen. Solche Verfahren und Computerprogramme sind aus dem Stand der Technik bekannt.

Ebenso kann über ein optisches Verfahren, mit beispielsweise einer Lichtschranke, eine Zählfunktion für Werkstücke eines zu untersuchenden Prozessnebenstroms realisiert werden.

Manchmal kann bereits eine Benutzereingabe ausreichen, um die Datenerfassung zu verwirklichen. Die Datenerfassung durch Benutzereingabe kann insbesondere mit den anderen Erfassungsverfahren gekoppelt werden, um die Fehlerquote niedrig zu halten, oder insbesondere zusätzliche Daten zu erfassen oder zu korrigieren.

In einer Ausführungsform der Erfindung erfolgt die Erfassung der Markierungen der ausgewählten Werkstücke des jeweiligen zu untersuchenden Prozessnebenstroms und/oder des jeweiligen Sammelbehälters durch ein Erfassungsmittel des Messsystems auf zumindest eine der folgenden Arten:
- durch Scannen der Markierung, wobei das Erfassungsmittel eine Scan-Vorrichtung, umfassend einen Scanner, aufweist,
- durch Aufnahme der Markierung, wobei das Erfassungsmittel eine Kamera aufweist, die insbesondere zur Erfassung von Barcodes und/oder QR Codes geeignet ist,
- durch Benutzereingabe, wobei das Erfassungsmittel eine Benutzer-Eingabe Schnittstelle aufweist.

Vorteilhaft an dieser Ausführungsform ist, dass über das Erfassungsmittel des Messsystems auch die Markierungen erfasst werden, so dass sowohl die erfassten Daten mit den Kenngrößen als auch die Markierungen miteinander verknüpft werden, so dass die erhobenen Daten mit den Messpunkten zugeordnet werden können.

Die Daten und die erfassten Markierungen können dann in ein Computerprogramm eingespeist werden, das dazu ausgebildet ist, diese Daten zu verarbeiten.

In einer Ausführungsform der Erfindung wird das Wiegeverfahren mit einer Wiegevorrichtung durchgeführt, wobei die ausgewählten Werkstücke des Prozessnebenstroms und/oder die Sammelbehälter mit den gesammelten Werkstücken über die Wiegevorrichtung geleitet werden und dort das Gewicht der ausgewählten und/oder gesammelten Werkstücke insbesondere automatisiert erfasst wird, wobei die Wiegevorrichtung insbesondere eine Brückenwaage umfasst.

In einer bevorzugten Ausführungsform der Erfindung umfasst Wiegevorrichtung das Erfassungsmittel, welches die Erfassung der Markierung des jeweiligen Sammelbehälters durchführt, um die Daten aus dem Wiegeverfahren dem jeweiligen Messpunkt zuzuordnen, und wobei insbesondere die so erfassten Daten an ein Computerprogramm insbesondere automatisiert weitergeleitet werden oder Teil eines Computerprogramms sind.

Hier ist vorteilhaft, dass bei dem Wiegevorgang gleichzeitig oder zumindest zeitnah eine Erfassung der Markierung erfolgen kann, so dass eine zuverlässige Zuordnung der Daten zu einem Messpunkt bewirkt werden kann. Die so erfassten Daten werden insbesondere zeitgleich an das Computerprogramm weitergeleitet und können "live" mit dem Computerprogramm verfolgt werden - ein wesentlicher Aspekt der Industrie 4.0.

Eine Ausführungsform der Erfindung sieht vor, dass die Daten für zumindest einen Messpunkt angezeigt werden.

Dies hat insbesondere den Vorteil, dass eine Person, beispielsweise das Personal ein Feedback über den Verlauf des Prozesses bekommen, und gegebenenfalls vor Ort in den Prozess eingreifen können.

In einer weiteren Ausführungsform der Erfindung wird den erfassten Daten zumindest eine Information aus einer externen Quelle hinzugefügt, insbesondere eine Information aus einem Enterprise-Resource-Planning System (EPRS). Ein solches ERPS ist insbesondere dazu vorgesehen, einen betrieblichen Wertschöpfungsprozess effizienter zu gestalten und eine stetig optimierte Steuerung der unternehmerischen und betrieblichen Abläufe zu gewährleisten. Ein ERPS ist häufig ein Computerprogramm, das Informationen insbesondere über betriebliche Abläufe verarbeitet und zur Verfügung stellen kann.

In einer weiteren Ausführungsform der Erfindung werden die Daten ausgewertet und graphisch angezeigt. Insbesondere werden die Daten verarbeitet und insbesondere zur Visualisierung bzw. graphischen Darstellung auf einem stationären Bildschirm, auf einem mobilen Display, wie einem Tablet Computer, auf einem insbesondere übergreifenden Infoterminal und/oder auf einer geeigneten Anzeige-Oberfläche, bereitgestellt werden, wobei insbesondere solche zugeordneten Daten bereitgestellt werden, welche für einen Messpunkt erfasst wurden, dessen Prozessnebenstrom eine Prozessmodifikation, insbesondere eine Verbesserungsmaßnahme erfordern.

Es sei darauf hingewiesen, dass alle Prozessdaten "live" also praktisch zeitgleich zur Verfügung gestellt werden, die Prozessleistung (wie beispielsweise der Effizienzgrad, Störmeldungen etc.) also kontinuierlich und live von einem Anwender nachvollzogen werden können. Ein Anwender ist beispielsweise der Anlagenbetreiber oder ein Mitarbeiter. Dabei stehen dem Anwender die Daten nach dem Schwarmprinzip zur Verfügung. Eine mobiles Endgerät / App erkennt im RFID Raum der Messpunkte seine Position und leitet ihn bspw. an den ineffizientesten Punkt, um hier dann anhand der Daten vor Ort / auf seinem Endgerät direkt in die Ideenfindung einsteigen zu können.

In einer weiteren Ausführungsform der Erfindung findet in zumindest einem zu untersuchenden Prozessnebenstrom ein Prozessschritt statt, wobei insbesondere dem Prozessschritt ein Arbeitsplatz zugeordnet ist und wobei die erfassten Daten für den jeweiligen Messpunkt des besagten mindestens einen zu untersuchenden Prozessnebenstroms dem Prozessschritt zugeordnet werden.

In einer weiteren Ausführungsform der Erfindung ist der Prozesshauptstrom Teil einer Produktionslinie, wobei der Prozesshauptstrom Werkstücke aufweist, und wobei insbesondere bei Prozessschritten bei denen Werkstücke verworfen werden, jene Werkstücke einen Prozessnebenstrom bilden oder in dem Sammelbehälter gesammelt werden.

Die erfindungsgemäße Aufgabe wird weiterhin durch ein Computerprogramm gelöst.

Die Erfindung weist ein solches Computerprogramm zum Erfassen und Quantifizieren von Kenngrößen eines Prozesses, bei dem ein Prozesshauptstrom in Prozessschritten abgearbeitet wird, einen Programmcode zur Durchführung der nachfolgenden Verfahrensschritte auf, wenn das Computerprogramm auf einem Computer ausgeführt wird:
- Definieren von Messpunkten für den Prozess, wobei jedem Messpunkt mindestens ein zu untersuchender Prozessnebenstrom sowie insbesondere ein markierter Sammelbehälter zum Sammeln von insbesondere fehlerhafter Werkstücken zugeordnet wird,
- Erfassen von Daten für jeden Messpunkt für jeweils den ihm zugeordneten zu untersuchenden Prozessnebenstrom mit einem Messsystem, wobei die Daten zumindest eine gemessene Kenngröße des jeweiligen zu untersuchenden Prozessnebenstroms enthalten.
- Auswerten und/oder Anzeigen der Daten für zumindest einen Messpunkt oder für selektierte Messpunkte.

Unter einem Computer sind insbesondere elektronische Schaltkreise zu verstehen, die dazu ausgebildet sind, die beanspruchten Programmcodeanweisungen auszuführen.

Das Computerprogramm ist weiterhin bevorzugt dazu ausgebildet, vorteilhafte Verfahrensschritte, die in den Unteransprüchen, beschrieben sind, auszuführen oder anzuleiten, wenn es auf einem Computer ausgeführt wird und insbesondere mit einer entsprechenden Vorrichtung zur Ausführung der Programmbefehle kommuniziert.

Gemäß der Erfindung ist ein Computerprogramm zum Erfassen und Quantifizieren von Kenngrößen eines Prozesses vorgesehen, der einen Prozesshauptstrom aus Werkstücken aufweist, wobei das Computerprogramm einen Programmcode aufweist, um das erfindungsgemäße Verfahren auszuführen oder anzuleiten, wenn das Computerprogramm auf einem Computer ausgeführt wird, und wenn es insbesondere mit einer entsprechenden Vorrichtung zur Ausführung der Programmbefehle kommuniziert.

Eine maschinenlesbare Markierung ist insbesondere ein Barcode oder ein QR-Code oder ein RFID Chip.

Eine Brückenwaage ist insbesondere ein Wiegevorrichtung, deren Wiegeaufnahme ebenerdig mit dem umfassenden Boden ausgebildet ist, so dass das Wiegegut insbesondere nicht angehoben oder abgesenkt werden muss, um auf die Brückenwaage zu gelangen.

Insbesondere erfolgt der Wiegevorgang automatisiert beispielsweise über eine sogenannte "Scannerdusche", als dem zumindest quasi- kontinuierlichen Abtasten eines definierten Raumfensters durch einen Scanner. Dieser Scanner ist dazu ausgebildet, die Markierung am Sammelbehälter zu erfassen und weiterzuverarbeiten, wenn der Sammelbehälter über die Brückenwaage bewegt wird. Die so erfassten Daten werden an ein Computerprogramm bzw. einen Computer weitergeleitet.

Ein Erfassungsmittel ist beispielsweise, wie oben bereits erwähnt, eine Scan-Vorrichtung, die dazu ausgebildet ist, die maschinenlesbare Markierung zu erfassen.

In der nachfolgenden Figuren Beschreibung werden Merkmale, Ausführungsformen und Vorteile der Erfindung beschrieben. Die dort beschriebenen Merkmale können einzeln oder in beliebiger Kombination einem der Ansprüche 1 bis 9 hinzugefügt werden.

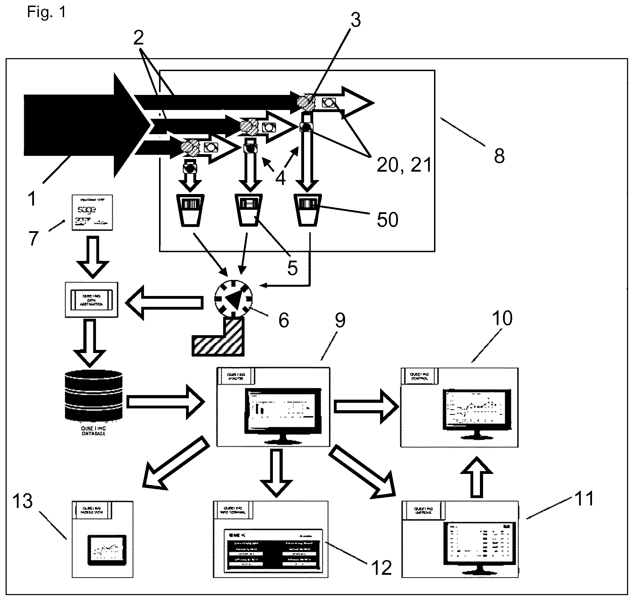

Fig. 1 zeigt beispielhaft ein Ablauf Diagramm des erfindungsgemäßen Verfahrens. Ein Prozesshauptstrom 1 aus Werkstücken 20, 21 wird in Prozessnebenströme 2 unterteilt, wobei jedem Prozessnebenstrom 2 ein Messpunkt 3 zugeordnet ist, für den Daten erhoben werden. Diese Daten werden an Messstationen erhoben, die Messsysteme 6 aufweisen. An einer solchen Messstation werden Kenngrößen eines oder mehrerer Prozessnebenströme 2 erhoben, wie beispielsweise das Gewicht von aussortierten - weil beispielsweise fehlerbehaftet - Werkstücken 20, 21, 4. Eine Messstation kann natürlich auch direkt am Messpunkt 3 verortet sein und beispielsweise eine Zählvorrichtung für die Werkstücke 20, 21, beispielsweise basierend auf einer Lichtschranke, aufweisen.

In vielen Fertigungsanlagen fällt auch Abfall 4 in verschiedensten Formen, wie beispielsweise Verschnitt, Ausschuss etc. an. Dieser Abfall 4 wird gemäß dem erfindungsgemäßen Verfahren in Sammelbehältern 5 gesammelt, die mit einer Markierung 50, wie einem Barcode 502 und/oder einem oder mehreren QR-Codes 501, markiert sind. Diese Sammelbehälter 5 werden dann zu der Messstation transportiert, wo das Gewicht des jeweiligen Sammelbehälters bzw. das Gewicht des Inhalts des jeweiligen Sammelbehälters erfasst wird. Gleichzeitig oder zeitkorreliert zum Wiegevorgang wird zumindest die eine Markierung 50 mit einer Scan-Vorrichtung an der Messstation erfasst. Die Markierung 50 erlaubt das gemessene Gewicht der Werkstücke 20, 21, 4 einem Messpunkt 3 eindeutig zuzuordnen. Die Messstation übermittelt die gewonnen Daten, hier das Gewicht des spezifischen Sammelbehälters 5, bzw. dessen Inhalt an ein Computerprogramm (im Folgenden auch Software bezeichnet), das in anschließenden Programm-Schritten den Prozess anhand der so gewonnen Daten darstellen kann, so dass der Prozess aufgrund der so strukturierten Daten optimiert werden kann.

Als Markierung kommen auch RFID Chips in Frage. Mit einer solchen Markierung des Sammelbehälters ist es möglich, dass sich der Sammelbehälter am Messpunkt über das Auslesen des RFID-Chips (also der Markierung) anmeldet und dadurch mit diesem verknüpft wird.

Am Messpunkt kann eine Füllstandsüberwachung per Kamera installiert sein, oder der markierte Sammelbehälter oder das Werkstück steht auf einer Waage an der Anlage.

Wenn der Sammelbehälter voll ist, setzt der Messpunkt aufgrund der zustandsgebenden Sensoren eine Meldung ab "fast voll" und löst damit einen Abruf an die Logistik aus.

Daraufhin kann beispielsweise ein fahrerloses Transportsystem (FTS) oder ein Stapler den Sammelbehälter abholen.

Der Sammelbehälter meldet sich beim Stapler an - entweder wieder über RFID oder über Scanner.

Der Behälter wird zum Wiegen gefahren.

Ohne Wiegung kann der Behälter nicht entleert werden (Staplergabel wird z.B. ab einer bestimmten Höhe blockiert oder ein Rolltor / Behälter öffnet nicht)

Kommt es zu Unstimmigkeiten im Wiegeprozess, kann durch die Verknüpfung des Behälters mit dem Stapler herausgefunden werden, welcher Stapler dafür verantwortlich war.

Dadurch wird erreicht, dass Bedienungsfehler vermieden werden, um den Menschen Freiraum für wertschöpfende Tätigkeiten zu geben und den Fehlereinfluss durch den Menschen zu reduzieren.

Die Messstation kann auch Terminals oder andere Benutzereingabe Vorrichtung aufweisen, mit denen eine Person Daten auch manuell in die Software eingeben kann.

Zusätzlich zu den so gewonnen Daten werden auch externe Daten aus externen Quellen in die Software eingepflegt, wie sie beispielsweise aus bekannten Enterprise-Resource-Planning ERP System zur Verfügung gestellt werden.

Das Computerprogramm weist verschiedene Module auf, die das Verfahren steuern bzw. die Daten auswerten:
In einem ersten Modul (DEFINE Modul) werden die Prozessnebenströme 2 definiert, bzw. der Prozesshauptstrom 1 in Prozessnebenströme 2 unterteilt.

Insbesondere wird hier die Organisationsstruktur auf Basis der Kostenstellenstruktur des Prozesses erstellt.

Weiterhin werden hier insbesondere die Messpunkte 3 der entsprechenden Prozessnebenströme 2 festgelegt. Auch kann das Computerprogramm eine entsprechend konfigurierte Hardware beauftragen entsprechend den definierten Messpunkten 3, Markierungen 50 für die Sammelbehälter 5 auszudrucken, die diesen Messpunkten 3 zugeordnet sind.

In einem weiteren Modul des Computerprogramms (ANALYSE-Bildschirm) werden insbesondere die Verluste, also aussortierte Werkstücke 20, 21, 4, wie Abfall 4, Verschnitt etc. anhand der erfassten Daten visualisiert und sortiert. Die Anzeige umfasst dabei insbesondere ein Paretodiagramm und/oder den zeitlichen Verlauf der Verluste.

Ein anderes Modul des Computerprogramms (CONTROL-Bildschirm) wird dazu verwendet, die Verluste und weitere Kenngrößen in ihrem Zeitverlauf darzustellen. Als Zeitspanne kann hier insbesondere Jahre, Monate oder Tage als Anzeigezeitraum gewählt werden.

Ein weiteres Modul (IMPROVE-Bildschirm) ermöglicht es Maßnahmen anzulegen und die Auswirkungen dieser Maßnahmen auf den Prozess zu verfolgen.

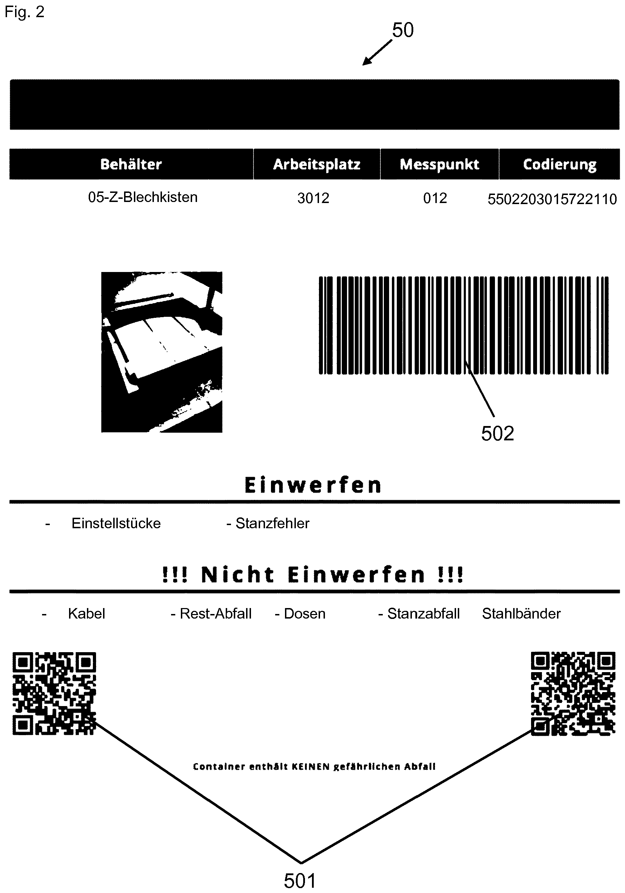

Fig. 2 zeigt eine Markierung 50 als Papierausdruck, die mehrere maschinenlesbare QR-Codes 501, Barcodes 502 und auch Text enthält, der zur Anweisung von Personal dient.

### Bezuqszeichenliste:

- 1: Prozesshauptstrom
- 2: Prozessnebenstrom
- 3: Messpunkt
- 4: aussortierte Werkstücke / Ausschuss / Abfall
- 5: Sammelbehälter
- 6: Messsystem
- 7: externe Informationen
- 8: Definieren / unterteilen der Prozessnebenströme, Unterteilungsmodul
- 9: Analysemodul
- 10: Darstellungsmodul für Verluste und weitere Kennzahlen
- 11: Verbesserungsmodul
- 12: Infoterminal
- 13: mobile Anzeigevorrichtung
- 20: Werkstücke
- 21: Werkstücke
- 50: Markierung
- 501: QR-Code
- 502: Bar-Code

## Patentansprüche

1. Verfahren zum Erfassen und Quantifizieren von Kenngrößen eines Prozesses, umfassend einen Prozesshauptstrom aus Werkstücken (4, 20, 21), aufweisend die Schritte:
- Unterteilen des Prozesshauptstroms (1) in zu untersuchende Prozessnebenströme (2) aus Werkstücken (4, 20, 21),
- Definieren von Messpunkten (3) für den Prozess, wobei jedem Messpunkt (3) ein zu untersuchender Prozessnebenstrom (2) zugeordnet wird,
- Erfassen von Daten für jeden Messpunkt (3) für den ihm zugeordneten zu untersuchenden Prozessnebenstrom (2) mit zumindest einem Messsystem (6), wobei die Daten zumindest eine gemessene Kenngröße des jeweiligen zu untersuchenden Prozessnebenstroms (2) enthalten,
- Auswerten (9, 10, 11) der erfassten Daten für zumindest einen Messpunkt (3),
- wobei an zumindest einem Messpunkt (3) ausgewählte Werkstücke (4, 21) des jeweils zu untersuchenden Prozessnebenstroms (2) erfasst werden und/oder ein-, um- oder aussortiert werden,
**dadurch gekennzeichnet, dass**
- die ausgewählten Werkstücke (4, 21) des jeweils zu untersuchenden Prozessnebenstroms (2) an dem jeweiligen Messpunkt (3) in einem dem jeweiligen Messpunkt (3) zugeordneten Sammelbehälter (5) gesammelt werden,
- wobei mit dem mindestens einen Messsystem (6) für die Messpunkte (3) jeweils ein gemessenes Gewicht der in dem Sammelbehälter (5) gesammelten Werkstücke (4, 21) als Kenngrößen gemessen wird, wobei die erfassten Daten diese mindestens eine Kenngröße enthalten,
- wobei die Sammelbehälter (5) mit einer Markierung (50) markiert werden, so dass die am Messsystem (6) erfassten Daten durch die Markierung (50) dem jeweiligen Messpunkt (3) zuordenbar sind,
- wobei die Daten oder aus den Daten erzeugte Größen für den mindestens einen Messpunkt (3) angezeigt werden.

2. Verfahren nach Anspruch 1, **dadurch gekennzeichnet, dass** die Sammelbehälter (5) mit einer maschinenlesbaren Markierung (50), insbesondere mit einem Barcode (502) und/oder einem QR-Code (501) und/oder einem RFID-Chip markiert werden.

3. Verfahren nach einem der vorhergehenden Ansprüche, **dadurch gekennzeichnet, dass** die Erfassung der Daten für den jeweiligen Messpunkt (3) mit dem Messsystem (6) auf zumindest eine der folgenden Arten erfolgt:
- durch ein Wiegeverfahren,
- durch eine Objekt-Erkennung für die Werkstücke (4, 20, 21) des Prozessnebenstroms (2) mit einer Bilderfassungseinrichtung,
- durch ein optisches Verfahren, insbesondere aufweisend eine Lichtschranke,
- durch ein Transmitter-Verfahren, aufweisend zumindest einen Näherungssensor, insbesondere in Form eines RFID-Chip-Transmitter-Systems,
- durch ein Pick-to-Light Verfahren oder ein Put-to-Light Verfahren,
- durch Benutzereingabe,
- durch Messung von Prozessschrittdauern.

4. Verfahren nach einem der vorhergehenden Ansprüche, **dadurch gekennzeichnet, dass** die Erfassung der Markierungen (50) des jeweiligen Sammelbehälters (5) durch ein Erfassungsmittel des Messsystems (6) auf zumindest eine der folgenden Arten erfolgt:
- durch Scannen der Markierung (50), wobei das Erfassungsmittel eine Scan-Vorrichtung, umfassend einen Scanner, aufweist,
- durch Aufnahme der Markierung (50), wobei das Erfassungsmittel eine Kamera aufweist die insbesondere zur Erfassung von Barcodes und/oder QR-Codes geeignet ist,
- durch Benutzereingabe, wobei das Erfassungsmittel eine Benutzer-Eingabe Schnittstelle aufweist.

5. Verfahren nach Anspruch 3 oder 4, **dadurch gekennzeichnet, dass** das Wiegeverfahren mit einer Wiegevorrichtung durchgeführt wird, wobei die ausgewählten Werkstücke (4, 20, 21) des Prozessnebenstroms (2) und/oder die Sammelbehälter (5) mit den gesammelten Werkstücken (4, 21) über die Wiegevorrichtung geleitet werden und dort das Gewicht der ausgewählten und/oder gesammelten Werkstücke (4, 20, 21) erfasst wird, wobei die Wiegevorrichtung insbesondere eine Brückenwaage umfasst.

6. Verfahren nach einem der Ansprüche 4 bis 5, **dadurch gekennzeichnet, dass** Wiegevorrichtung das Erfassungsmittel aufweist, welches die Erfassung der Markierung (50) des jeweiligen Sammelbehälters (5) durchführt, um die Daten aus dem Wiegeverfahren dem jeweiligen Messpunkt (3) zuzuordnen, und wobei insbesondere die so erfassten Daten an ein Computerprogramm insbesondere automatisiert weitergeleitet werden oder Teil eines Computerprogramms sind.

7. Verfahren nach einem der vorhergehenden Ansprüche, **dadurch gekennzeichnet, dass** den erfassten Daten zumindest eine Information aus einer externen Quelle hinzugefügt (7) wird, insbesondere eine Information aus einem Enterprise-Resource-Planning System.

8. Verfahren nach einem der vorhergehenden Ansprüche, **dadurch gekennzeichnet, dass** die Daten verarbeitet werden und insbesondere zur Visualisierung auf einem stationären Bildschirm, auf einer mobilen Anwendung (13), auf einem insbesondere übergreifenden Infoterminal (12) und/oder auf einer geeigneten Anzeige-Oberfläche, bereitgestellt werden, wobei insbesondere solche verarbeiteten Daten oder aus den Daten erzeugte Größen bereitgestellt werden, welche für einen Messpunkt (3) erfasst wurden, dessen Prozessnebenstrom (2) eine Prozessmodifikation, insbesondere eine Verbesserungsmaßnahme erfordern.

9. Computerprogramm zum Erfassen und Quantifizieren von Kenngrößen eines Prozesses, aufweisend einen Prozesshauptstrom (1) aus Werkstücken (4, 20, 21), wobei das Computerprogramm einen Programmcode aufweist, um das Verfahren nach einem der Ansprüche 1 bis 8 auszuführen oder anzuleiten, wenn das Computerprogramm auf einem Computer ausgeführt wird und insbesondere mit einem entsprechenden System oder einer entsprechenden Vorrichtung zur Ausführung der Programmbefehle kommuniziert.

## Claims

1. A method for capturing and quantifying of parameters of a process, comprising a main process stream of workpieces (4, 20, 21), comprising the steps of:
- dividing the main process stream (1) into secondary process streams (2) of workpieces (4, 20, 21) to be investigated,
- defining of measuring points (3) for the process, wherein each measuring point (3) has an assigned secondary process stream (2) to be investigated,
- capturing of data for each measuring point (3) for the secondary process stream (2) to be investigated assigned to it by at least one measuring system (6), wherein the data comprise at least one measured parameter of the respective secondary process stream (2) to be investigated,
- evaluating (9, 10, 11) of the captured data for at least one measuring point
- wherein at least one measuring point, selected workpieces (4,21) of the respective secondary process stream (2) to be investigated are captured and sorted, re-sorted or sorted out,
**characterized in that**
- the selected work pieces (4, 21) of the respective secondary process stream (2) to be investigated are collected at the respective measuring point (3) in a collection container (5) assigned to the respective measuring point (3),
- wherein in each case one measured weight of the work pieces (4, 21) that are collected in the collecting container (5) is measured as parameters with the at least one measuring system (6) for the measuring points (3), wherein the captured data comprises this at least one parameter,
- wherein the collecting containers (5) are marked with a mark (50), **in that** the data captured with the measuring system (6) may be assigned by means of the mark (50) to the respective measuring point (3),
- wherein the data or from the data generated parameters are displayed for the at least one measuring point (3).

2. The method according to claim 1, **characterized in that** the collecting containers (5) are marked with a machine-readable mark (50), in particular with a bar-code (502) and/or with a QR-code (501) and/or with a RFID-Chip.

3. The method according to any of the preceding claims, **characterized in that** the capturing of the data for the respective measuring point (3) with the measuring system (6) takes place by at least one of the following means:
- by a weighing procedure,
- by an object-recognition for the work pieces (4, 20, 21) of the secondary process stream (2) by means of an image capture device,
- by an optical method, in particular comprising a light barrier,
- by a transmitter-procedure, comprising at least one proximity sensor, in particular in form of a RFID-Chip-transmitter system,
- by a pick-to-light procedure or a put-to-light procedure,
- by manual input,
- by measuring of the process step length,

4. The method according to any one of the preceding claims, **characterized in that** the capturing of the marks (50) of the respective collecting containers (5) takes place by a capturing means of the measuring system by at least one of following means:
- by scanning of the marks (50), wherein the capturing means comprises a scanning device which comprises a scanner,
- by recording of the mark, wherein the capturing means comprises a camera that is in particular suitable for capturing of bar-codes and/or QR-codes,
- by manual input, wherein the capturing device comprises a user-input port.

5. The method according to claim 3 or 4, **characterized in that** the weighing procedure is realized by a weighing device, wherein the selected work pieces (4, 20, 21) of the secondary process stream (2) and/or the collecting containers (5) with the collected work pieces (4, 21) are directed over the weighing device where the weight of the selected and/or collected work pieces (4, 20, 21) is captured, wherein the weighing device comprises in particular a weigh bridge.

6. The method according one of the claims 4 or 5, **characterized in that** the weighing device comprises the capturing device, which realizes the capturing of the marks (50) of the respective collecting container (5), in order to assign the data of the weighing procedure to the respective measuring point (3) and wherein in particular the as captured data are transferred to a computer program, in particular automatically, or are part of a computer program.

7. The method according to any one of the preceding claims, **characterized in that** at least one information from an external source is added (7) to the captured data, in particular an information of an enterprise-resource-planning system.

8. The method according to any one of the preceding claims, **characterized in that** the data is processed and in particular provided for the visualization on a stationary screen, on a mobile device (13), on an in particular comprehensive information terminal (12), and/or on a suitable screen surface, wherein in particular such processed data or values generated from data are provided, which have been captured for a measuring point (3), where the secondary process stream requires a process modification, in particular an improvement measure.

9. A computer program for the capturing of and quantification of parameters of a process, comprising a main process stream (1) of work pieces (4, 20, 21), wherein the computer program comprises a program code in order to perform or to guide the method according to any of the claims 1 to 8, when the computer program is run on a computer and communicates in particular with a suitable system or a suitable device in order to execute the program commands.

## Revendications

1. Procédé de saisie et de quantification de grandeurs caractéristiques d'un processus comportant un flux de processus principal composé de pièces d'usinage (4, 20, 21), comprenant les étapes suivantes :
- division du flux de processus principal (1) en flux de processus secondaires (2) composés de pièces d'usinage (4, 20, 21) à examiner,
- définition de points de mesure (3) pour le processus, un flux de processus secondaire (2) à examiner étant affecté à chaque point de mesure (3),
- saisie de données pour chaque point de mesure (3) pour le flux de processus secondaire (2) à examiner qui lui est affecté, avec au moins un système de mesure (6), lesdites données contenant au moins une grandeur caractéristique mesurée pour le flux de processus secondaire (2) à examiner respectif,
- analyse (9, 10, 11) des données saisies pour au moins un point de mesure (3),
- des pièces d'usinage (4, 21) sélectionnées du flux de processus secondaire (2) à examiner respectif étant saisies et/ou classées, reclassées ou déclassées sur au moins un point de mesure (3),
**caractérisé en ce que**
- les pièces d'usinage (4, 21) sélectionnées du flux de processus secondaire (2) à examiner respectif étant recueillies sur chaque point de mesure (3) dans un conteneur de collecte (5) affecté audit point de mesure (3),
- un poids mesuré des pièces d'usinage (4, 21) recueillies dans le conteneur de collecte (5) étant mesuré comme grandeur caractéristique par ledit au moins un système de mesure (6) pour les points de mesure (3), les données saisies contenant ladite au moins une grandeur caractéristique,
- le conteneur de collecte (5) étant pourvu d'un marquage (50), si bien que les données saisies sur le système de mesure (6) sont assignables au point de mesure (3) correspondant par le marquage (50),
- les données ou des grandeurs générées à partir des données étant affichées pour ledit au moins un point de mesure (3).

2. Procédé selon la revendication 1, **caractérisé en ce que** le conteneur de collecte (5) est pourvu d'un marquage (50) lisible par machine, en particulier d'un code à barres (502) et/ou d'un code QR (501) et/ou d'une puce RFID.

3. Procédé selon l'une des revendications précédentes, **caractérisé en ce que** la saisie des données par le système de mesure (6) pour chaque point de mesure (3) est effectuée au moins d'une des manières suivantes :
- au moyen d'un procédé de pesage,
- par une détection d'objet pour les pièces d'usinage (4, 20, 21) du flux de processus secondaire (2) au moyen d'un dispositif de détection d'image,
- au moyen d'un procédé optique, comportant en particulier une barrière photoélectrique,
- au moyen d'un procédé à transmetteur, comportant au moins un capteur de proximité, en particulier sous la forme d'un système de transmetteur à puce RFID,
- au moyen d'un procédé pick-to-light ou d'un procédé put-to-light,
- par saisie d'utilisateur,
- par mesure de durées d'étapes de processus.

4. Procédé selon l'une des revendications précédentes, **caractérisé en ce que** la saisie des marquages (50) de chaque conteneur de collecte (5) est exécutée par un moyen de détection du système de mesure (6) au moins d'une des manières suivantes :
- par scan du marquage (50), le moyen de détection comportant un dispositif de scannage comprenant un scanner,
- par enregistrement du marquage (50), le moyen de détection comportant une caméra prévue en particulier pour la détection de codes à barres et/ou de codes QR,
- par saisie d'utilisateur, le moyen de détection comportant une interface de saisie d'utilisateur.

5. Procédé selon la revendication 3 ou la revendication 4, **caractérisé en ce que** le procédé de pesage est exécuté au moyen d'un dispositif de pesage, les pièces d'usinage (4, 20, 21) du flux de processus secondaire (2) sélectionnées et/ou les conteneurs de collecte (5) avec les pièces d'usinage (4, 21) recueillies étant conduits sur le dispositif de pesage, le poids des pièces d'usinage (4, 20, 21) sélectionnées et/ou recueillies y étant saisi, le dispositif de pesage comprenant en particulier un pont-bascule.

6. Procédé selon la revendication 4 ou la 5, **caractérisé en ce que** le dispositif de pesage comprend le moyen de détection qui exécute la saisie du marquage (50) de chaque conteneur de collecte (5) pour affecter les données résultant du procédé de pesage au point de mesure (3) respectif, les données ainsi saisies étant en particulier automatiquement transmises à un programme informatique ou étant partie intégrante d'un programme informatique.

7. Procédé selon l'une des revendications précédentes, **caractérisé en ce qu'**au moins une information provenant d'une source externe est ajoutée (7) aux données saisies, en particulier une information provenant d'un système de planification des ressources d'entreprise.

8. Procédé selon l'une des revendications précédentes, **caractérisé en ce que** les données sont traitées et en particulier préparées pour visualisation sur un écran fixe, sur une application mobile (13), sur un terminal d'information (12) en particulier commun et/ou sur une surface d'affichage adaptée, de telles données traitées ou des grandeurs générées à partir des données étant en particulier préparées, lesquelles ont été saisies pour un point de mesure (3) dont le flux de processus secondaire (2) exige une modification de processus, en particulier une mesure d'amélioration.

9. Programme informatique pour la saisie et la quantification de grandeurs caractéristiques d'un processus comportant un flux de processus principal (1) composé de pièces d'usinage (4, 20, 21), ledit programme informatique présentant un code programme permettant d'exécuter ou de lancer le procédé selon l'une des revendications 1 à 8 quand le programme informatique est exécuté sur un ordinateur, et communique en particulier avec un système correspondant ou un dispositif correspondant pour l'exécution des instructions de programme.
